**Europäisches Patentamt**

(19) **European Patent Office**

**Office européen des brevets**

(11) Numéro de publication: **0 076 754 B1**

(12) **FASCICULE DE BREVET EUROPÉEN**

(45) Date de publication du fascicule du brevet: **17.12.86**

(51) Int. Cl.⁴: **F 16 C 29/06**

(21) Numéro de dépôt: **82401789.1**

(22) Date de dépôt: **30.09.82**

(54) **Patin de roulement.**

(30) Priorité: **02.10.81 FR 8118912**

(43) Date de publication de la demande:
**13.04.83 Bulletin 83/15**

(45) Mention de la délivrance du brevet:
**17.12.86 Bulletin 86/51**

(84) Etats contractants désignés:
**CH DE FR GB IT LI**

(56) Documents cité:
**CH-A-606 849**
**FR-A-2 018 752**
**FR-A-2 266 821**

(73) Titulaire: **Migaud, Claude, 49, Avenue Charles de Gaulle, F-92200 Neuilly Sur Seine (FR)**

(72) Inventeur: **Migaud, Claude, 49, Avenue Charles de Gaulle, F-92200 Neuilly Sur Seine (FR)**

(74) Mandataire: **Boivin, Claude, 9, rue Edouard-Charton, F-78000 Versailles (FR)**

LIBER, STOCKHOLM 1986

EP 0 076 754 B1

## Description

La présente invention concerne les patins de roulement comprenant une série de galets ou rouleaux rorteurs cylindriques qui sont montés mobiles dans un support comportant un corps et des embouts de retour, de manière à pouvoir à la fois pivoter autour de leur axe et se déplacer perpendiculairement à cet axe suivant un trajet sans fin. Elle concerne plus particulièrement les catins de roulement de ce genre dans lesquels des éléments sont intercalés entre les galets, les extrémités de ces éléments étant disposés dans des évidements ou rainures latérales de maintien ménagés dans ou sur des épaulements de guidage des galets. Ces évidements ou rainures de maintien peuvent être usinés dans les flancs latéraux des pistes de galets ou bien être situés à côté de ces pistes et être fermés par une bande rapportée fixée au patin.

L'expérience montre que, dans les patins jusqu'à présent réalisés, la circulation des galets n'est absolument pas régulière et se produit par à coups. Si, le patin n'étant pas sous charge, l'on déplace d'un mouvement uniforme le galet situé à l'extrémité avant de la piste porteuse, les galets et les éléments intercalaires étant en contact sur la totalité du chemin de retour, on constate que le galet situé à l'extrémité arrière de cette piste porteuse se déplace d'un mouvement tout-à-fait irrégulier. Or, pour avoir un fonctionnement correct, il serait nécessaire que les déplacements de deux galets soient constamment égaux, quelle que soit la valeur de ce déplacement.

Le patin de roulement selon l'invention est caractérisé en ce que la position du chemin de maintien des éléments intercalaires par rapport à la piste de roulement des galets ou inversement, est déterminée de manière que, sur toute la longueur de cette piste, l'écart entre les axes homologues de deux galets adjacents ou de deux éléments intercalaires adjacents, mesuré sur le trajet de ces axes reste constant. Par "axes homologues" il est entendu des axes qui sont parallèles aux génératrices et situés dans un plan diamétral perpendiculaire à la piste, passant par la génératrice de contact de chaque galet avec cette piste ou de chaque élément intercalaire considéré avec sa propre piste, et qui se trouvent à la même distance de ladite piste.

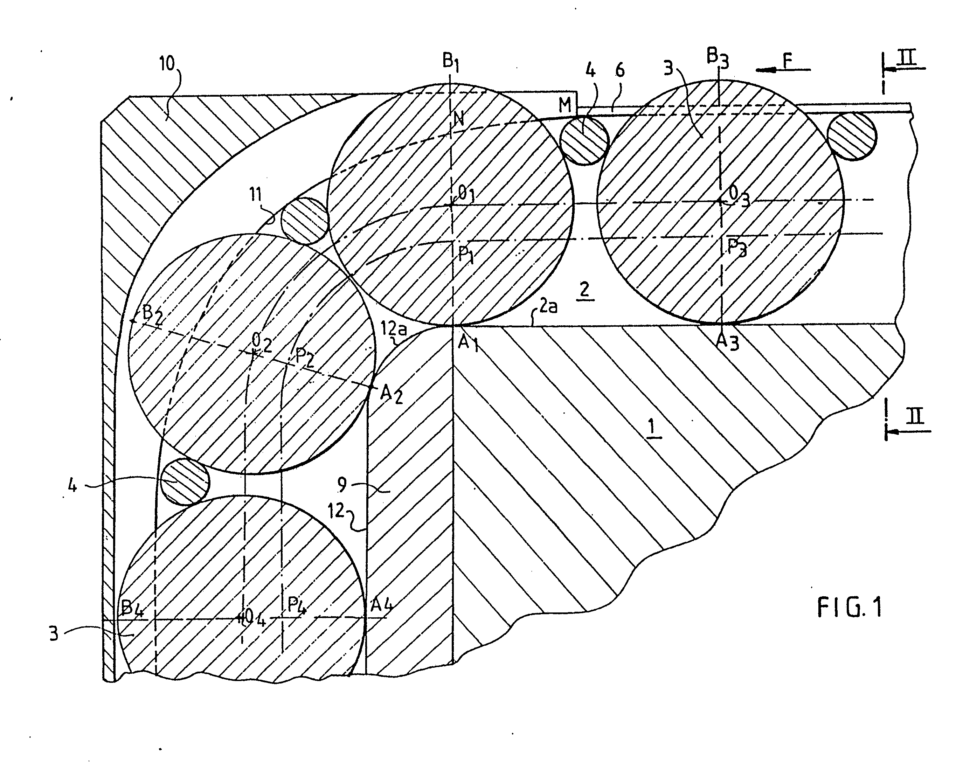

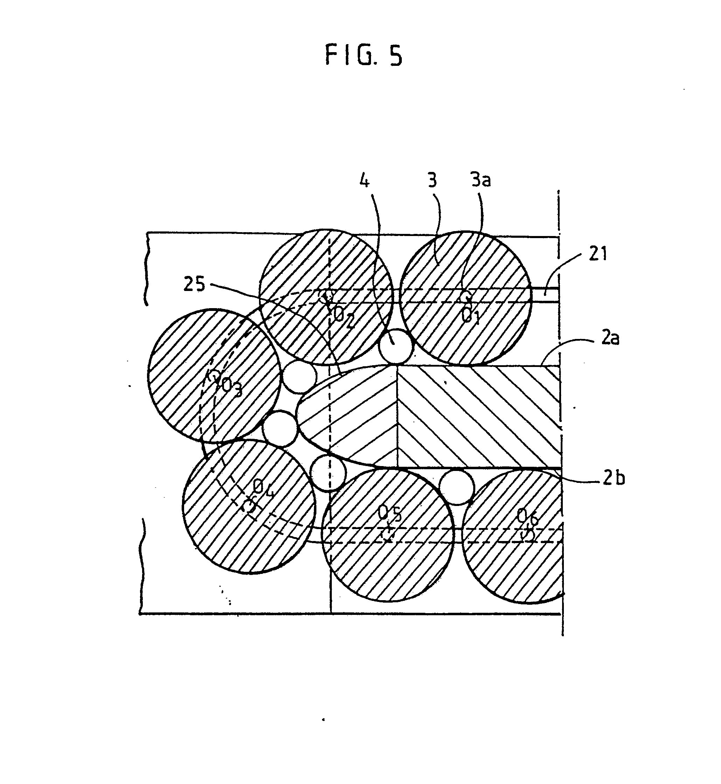

Les éléments intercalaires peuvent être disposés entre les parties extérienals des galets et assurer la retenue de ceux-ci (figure 1). Ils peuvent également être disposés entre les parties int51rieures des galets; ils assurent alors uniquement le réglage du jeu entre les galets (figure 5).

Les axes homologues des galets peuvent être des génératrices des galets diamétralement opposées aux génératrices de contact. Cette disposition présente l'inconvénient d'imposer de grands espacements entre les galets dans les parties rectilignes. Elle peut cependant être utilisée dans le cas de patins courbes, destinés à supporter des arbres et non pas des surfaces planes. Un patin connu suivant FR-A-2-018.752 comport; des éléments intercalaires roulant sur deux chemins de maintien successifs et non continus. Il en résulte que la vitesse d'entrée des éléments porteurs sur les pistes porteuses subit des variations préjudiciables à la régularité de fonctionnement du patin. Dans d'autres solutions connues et utilisées, les patins comportent des éléments roulants jointifs, dont la circulation le long des pistes rectilignes puis circulaires obéit aux lois de l'effet de chaîne conduisant à un retour irrégulier des éléments roulants sur la piste porteuse de charge. Il en résulte qu'un élément porteur entrant sur la piste porteuse est animé d'une vitesse différente de celle du train des éléments porteurs sous charge. Dans l'utilisation des patrins sur machines-outils, ce phénomène entraîne des à-coups et des vibrations dans le fonctionnement du patin et une variation de sa déformation élastique d'où il résulte des vibrations de la pièce à usiner, vibrations nuisibles en particulier dans les opérations de rectifications. On a pu atténuer ces défauts par différentes solutions dont un affaiblissement de la piste porteuse à ses extrémités ou encore en ménageant des chaufreins aux extrémités de la piste porteuse, ainsi qu'un jeu important entre les éléments roulants tous remèdes allant dans le sens de la diminution de la capacité de charge du patin.

Le but de la présente invention est de régulariser la circulation des éléments roulants sur la piste chargée, en faisant en sorte que les éléments roulants abordent cette piste à la même vitesse de déplacement que le train des éléments roulants qui se trouvent sur cette piste, ce qui supprime les effets pertubateurs de l'effet de chaîne, gratifiant ainsi le patin d'un fonctionnement analogue à celui d un roulement à rouleaux classique. Le patin de roulement selon l'invention est caractérisé en ce que la position du chemin de maintien des éléments intercalaires par rapport à la piste sans fin des éléments porteurs ou inversement, est déterminée de manière que, sur tout le parcours des éléments roulants, l'écart entre les axes homologues de deux éléments roulants adjacents ou de deux éléments intercalaires adjacents, mesuré sur le trajet de ces axes reste constant. Par "axes homologues" il est entendu des axes qui sont parallèles aux génératrices des éléments roulants ou intercalaires et situés dans un plan perpendiculaire à la pist des éléments porteurs ou au chemin de maintien des éléments intercalaires, passant par la génératrice de contact de chaque élément roulant avec sa piste ou de chaque élément intercalaire avec son chemin de maintien, et qui se trouve à la même distance soit de la piste sans fin, soit du chemin de maintien.

Il est évident que si pareille condition est réalisée pour la circulation des axes homologues, il en résultera une circulation régulière des éléments roulants sur la piste porteuse de la charge. Les axes homologues des galets peuvent également être constitués par les axes de symétrie de ces galets. Cette disposition a l'avantage de donner aux galets une vitesse de translation constante sa vitesse de rotation variant. Elle nécessite, comme la disposition précédente, mais à un moindre degré, un écartement dans les parties rectilignes, écartement qui se réduit progressivement dans les courbes, puis se dilate à l'approche de la partie rectiligne de retour. Elle peut cependant être utilisée pratiquement sans inconvénients, aussi bien avec les patins rectilignes qu'avec les patins courbes.

Les axes homologues peuvent aussi être les génératrices de contact des galets avec la piste. La vitesse de rotation des galets est alors constante, alors que leur vitesse de translation augmente à l'entrée des courbes et diminue à la sortie de celles-ci. L'avantage est que, dans les parties rectilignes du patin, les galets peuvent être très près les uns des autres et même jointifs, pour s'écarter à l'entrée des courbes. La capacité de charge du patin en est améliorée; cependant la distance entre galets risque de devenir trop importante dans les courbes.

D'une façon plus générale, les axes homologues peuvent être situés dans le plan diamétral, à un endroit quelconque entre la génératrice de contact et la génératrice diamétralement opposée, par exemple comme indiqué en $P_3$, $P_1$, $P_2$ et $P_4$ (figure 1).

Dans le cas où c'est l'écart entre les axes homologues des éléments intercalaires adjacents qui reste constant, les axes homologues sont également situés dans le plan perpendiculaire au chemin de maintien et passant par le centre de l'élément intercalaire considéré ou par la génératrice de contact de l'élément intercalaire avec le chemin de maintien, ou par un coint quelconque du diamètre correspondant.

La circulation des éléments roulants sur la piste chargée du pation selon l'invention étant parfaitement régulière, il est possible d'utiliser des formes de chemin de roulement dans les parties extrêmes de la piste qui soient non pas semi-circulaires mais aplaties, par exemple une partie droite encadrée par deux quarts de cercle; l'épaisseur de l'âme du patin peut être réduite. pour un même encombrement extérieur on obtient ainsi un patin dans lequel la portion porteuse de la piste est plus longue que celle des patins conventionnels et ce même si les galets ont un diamètre plus important.

On a décrit ci-après, à titre d'exemples non limitatifs, deux modes de réalisation du patin selon l'invention, avec référence au dessin annexé dans lequel :

La Figure 1 est une vue en coupe longitudinale de l'une des extrémités d'un patin de roulement selon l'invention, dans un premier mode de réalisation,

La Figure 2 en est une coupe transversale suivant II-II de le Figure 1;

La Figure 3 représente un détail d'une variante;

La Figure 4 montre en élévation un mode de réalisation d'un patin dont les pistes sont courbes.

La Figure 5 est une vue semblable à la Figure 1 d'un autre mode de réalisation;

La Figure 6 est une vue en coupe transversale d'un détail d'une variante;

La Figure 7 en est une coupe longitudinale partielle suivant VII-VII de la Figure 6;

La Figure 8 est une vue en perspective d'une extrémité d'une bande de maintien des organes de roulement intercalaires;

La Figure 9 est une vue en perspective d'un détail d'un autre mode de réalisation;

La Figure 10 est une vue semblable à la Figure 1 et montre une variante.

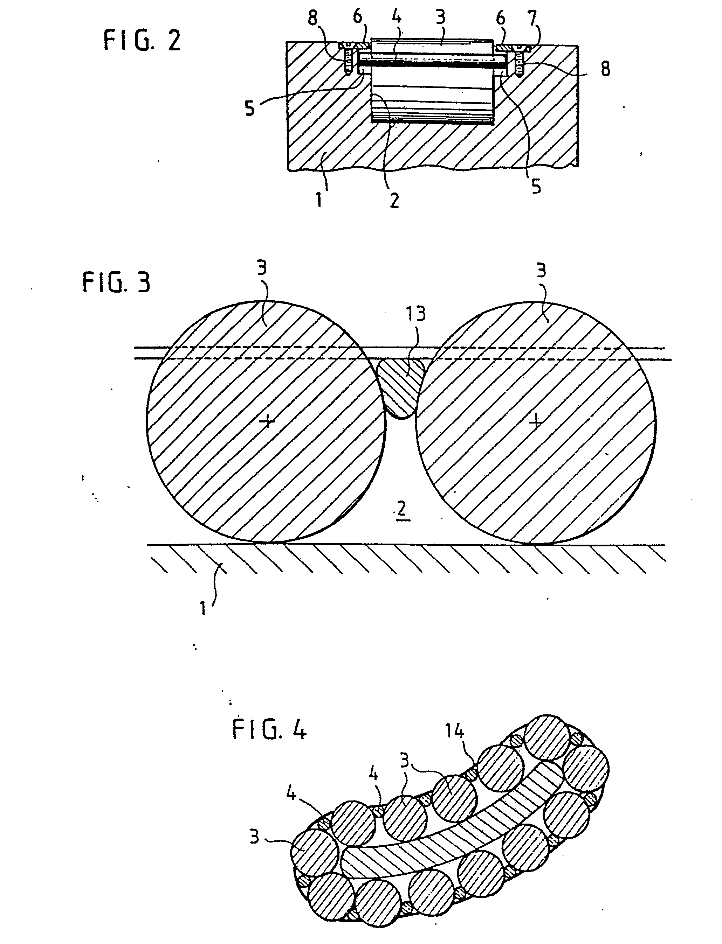

Tel qu'il est représenté aux Figures 1 et 2, le patin de roulement comprend un corps ou support 1 dans les deux faces longitudinales opposées duquel sont ménagés des évidements rectilignes 2 de section rectangulaire. Des galets cylindriques 3 sont disposés dans les évidements 2 qui s'étendent sur toute la longueur du corps. L'évidement 2 a une profondeur légèrement inférieure au diamètre des galets 3 de sorte que les galets qui s'y trouvent, font saillie par rapport au corps; sa largeur est sensiblement égale à la Longueur des galets, ceux-ci étant ainsi guidés latéralement avec précision.

Entre les galets 3 sont intercalés des aiguilles cylindriques 4 qui sont plus longues que les galets et dont les extrémités sont engagées dans des évidements 5 disposés latéralement, de part et d'autre des évidements 2. Ces aiguilles qui maintiennent les galets 3 en place sont elles-mêmes maintenues par des bandes planes 6 qui recouvrent leurs extrémités et sont partiellement logées dans des évidements 7 adjacents aux évidements 5, la profondeur de ces évidements étant au moins égale à l'épaisseur des bandes; ces dernières sont fixées sur le bâti 1 par des vis 8, par soudure, par encastrement ou par tout autre moyen.

A chacune des extrémités du corps 1 se trouve un embout 9 fermé par un couvercle 10, ces deux éléments étant fixés au corps 1 par des boulons non représentés. Chacune des faces latérales internes de l'embout 9 comporte un décrochement 11 dont le fond se raccorde aux faces internes des bandes 6; sa partie centrale 12 se raccorde aux fonds des évidements 2 par des portions extérieurement cylindriques 12a.

Le corps 1, les embouts 9 et les couvercles 10 déterminent un trajet sans fin pour les galets 3 et pour les aiguilles de maintien 4. Lorsqu'une charge est déplacée sur le patin dans le sens de la flèche F, chacun des galets passe successivement dans l'évidement 2 supérieur, à l'intérieur de l'un des embouts, dans l'évidement 2 inférieur et à l'intérieur de l'autre embout; les fonds des évidements 2 et les faces 12 des embouts constituent des pistes de roulement pour ces galets. De manière analogue, les aiguilles de maintien 4 se déplacent successivement au contact des bandes 6 supérieures, puis du fond du décrochement 11 de l'un des embouts, des bandes 6 inférieures et du fond du décrochement 11 de l'autre embout, ces bandes et ces décrochements constituant des pistes de roulement pour les aiguilles.

La position des aiguilles 4 est déterminée par les bandes 6 et les décrochements 11; elle détermine elle-même l'espacement entre les galets 3.

Dans les parties rectilignes du patin, les bandes 6 sont parallèles au fond des évidements 2, sauf à leurs extrémités. Ces bandes commencent à s'infléchir pratiquement à partir du point de tangence M de l'aiguille 4 adjacente au galet 3 lorsque celui-ci se trouve à l'extrémité $A_1$ de la partie rectiligne de la piste 2a ou 2b (voir Figure 1). Les jeux entre les différents galets se trouvant dans les parties rectilignes sont donc constants et ont même valeur j.

Les décrochements 11 ne sont pas parallèles à la piste 12-12a, ils sont conformés par rapport à cette piste de manière à amener les aiguilles 4 dans une position telle que la distance entre les axes de symétrie $O_1$ et $O_2$ des galets adjacents se trouvant dans les embouts demeure identique quand on la mesure sur le parcours géométrique de l'axe. En d'autres termes, l'on a au dessin : $O_3 O_1 = O_1 O_2 = O_2 O_4$ j + 2 R (R = rayon du galet 3)

quelle que soit la position des galets.

Dans ces conditions, la circulation des galets est parfaitement régulière et se produit sans à coups, le long des pistes 2a et 2b.

La forme des décrochements 11 pourrait être telle que ce soit la distance entre les génératrices de contact $A_1$ et $A_2$ mesurée sur l'arc 12a, la distance entre les génératrices $B_1$ et $B_2$ diamétralement opposées aux génératrices $A_1$ et $A_2$, ou encore entre deux axes compris respectivement entre $A_1$ et $B_1$ et entre $A_2$ et $B_2$ et situés à la même distance de l'arc 12a qui reste constante.

Comme déjà précisé ci-dessus, le chemin 11 a été déterminé par les conditions que le galet suit un trajet imposé $A_3 A_1 A_{2\,4} A$ et que som axe de symétrie $O_3$, $O_1$, $O_2$ ou $O_4$ demeure à équidistance de ceux des galets qui lui sont adjacents, lorsque cette distance est mesurée sur le parcours géométrique de ces axes. Une position avantageuse des axes homologues peut être mathématiquement déterminée un peu en dessous de l'axe de symétrie et telle que les galets demeurent pratiquement jointifs dans les parties droites et encore très voisins dans les parties courbes, l'équidistance des axes homologues toujours mesurée suivant leur carcours géométrique, étant assurée par la conformation du chemin 11, obligeant ainsi les galets à respecter une même vitesse dès qu'ils se trouvent sur les pistes rectilignes.

Dans la réalisation décrite ci-dessus (Figures 1 et 2) les éléments intercalaires 4 déterminent le jeu entre les galets sont constitués par des aiguilles. Mais ils peuvent également être constitués par de simples barrettes non rotatives comme cela est indiqué en 13 sur la Figure 3.

Les patins peuvent être rectilignes; mais ils peuvent également être courbes, comme le montre la Figure 4 dans laquelle les éléments intercalaires 4 constitués car des aiguilles, sont maintenus par un élément 14. Egalement dans ce cas, la forme de l'élément 14 est déterminée de façon que la distance entre les axes de deux galets adjacents 3 demeure constante, si on la mesure sur le trajet courbe que parcourent ces axes.

La Figure 5 présente un autre mode de réalisation dans lequel les éléments intercalaires 4 sont situés en dessous des galets. Ceux-ci sont, à titre d'exemple, retenus par des tétons $3_3$ logés dans des rainures latérales 21. L'écartement des galets est constant, mesuré sur le parcours géométrique des centres, soit :
$O_1 O_2 = O_2 O_3 = O_3 O_4 = O_4 O_5 = O_5 O_6 = j + 2 R$

Cet écartement constant est dû à la présence des éléments intercalaires 4 qui roulent sur la piste 25, spécialement conformée à cet effet dans les parties courbes; la partie droite 2a sert de piste de roulement aux galets en contrainte sous la charge ; la partie droite 2b sert de piste de roulement de retour aux éléments intercalaires 4. Les galets dans cette partie du circuit, comme dans les parties extrêmes sont en équilibre entre deux éléments intercalaires et, par l'intermédiaire de leur téton 3a. la rainure 21.

On aurait tout aussi bien réalisé la retenue des galets, non pas par des têtons, mais par des éléments de retenue extérieurs. Mais les mouvements de rotation des trois trains de galets, d'éléments intercalaires et d'aiguilles de retenue n'auraient pas été concordants. A la Figure 5, les éléments intercalaires peuvent être indifféremment des aiguilles ou des billes. Dans le premier cas les pistes sur lesquelles les aiguilles auraient roulé auraient pû être ménagées sur les parois maintenant les galets latéralement.

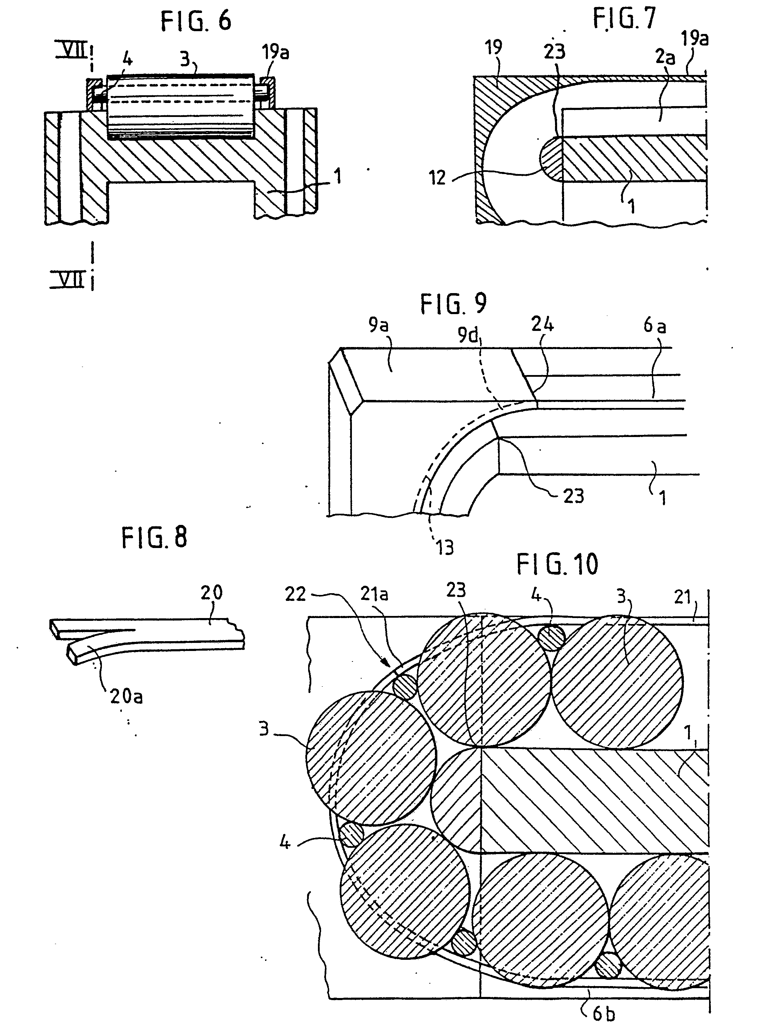

Dans le mode de réalisation des Figures 6 et 7, l'embout 9 et son couvercle 10 sont remplacés par un embout 19 qui, en une ou plusieurs pièces, comporte des prolongements 19a, de section en U ou en L par exemple, adjacents à l'évidement 2a du corps 1 du patin et dont les faces inférieures forment des pistes de roulement continues pour les aiguilles 4. Les prolongements 19a des deux embouts se rejoignent sensiblement au milieu du patin. On peut également envisager que les embouts de chaque extrémité et leur prolongement au-dessus du corps du patin ne fassent qu'une seule et même pièce, le montage des éléments roulants s'effectuant par l'autre face du corps du patin. Ces modes de réalisation simplifient à l'extrême l'usinage du corps du patin; ils permettent que la tête des boulons de fixation du patin sur le corps du bâti de la machine reste apparente de telle sorte que la largeur disponible pour les galets porteurs soit maximale, ce qui entraîne une économie de matière et d'usinage, et une augmentation de la capacité de charge du patin.

On remarquera à la Figure 7 que la piste de roulement des aiguilles 4 commence à s'infléchir bien avant l'extrémité du corps 1. En effet, à partir du moment où un galet franchit l'arête de l'évidement 2a, il suit la piste 12 et l'aiguille qui le suit immédiatement prend une trajectoire curviligne.

Au lieu d'utiliser pour maintenir les organes intercalaires des bandes planes 6a et 6b (Figure 9), on peut prévoir des bandes 20 dont les extrémités sont divisées en deux branches par une fente longitudinale (Figure 8), la branche intérieure 20a étant cintrée et se raccordant au fond de l'évidement 13.

A la Figure 9, on voit un embout dont chacun des éléments latéraux 9a comporte un prolongement 9d qui s'étend au-dessus du corps 1 et dont la face inférieure prolonge le fond de l'évidement 13 jusqu'à la face inférieure de la bande de retenue 6a, cette dernière étant ici plus courte aue le corps 1. Les prolongements 9d des embouts pourront être arrêtés de préférence à l'endroit 24 où se trouve positionné l'organe intercalaire lorsque le galet porteur qui le précède immédiatement est sur le point de quitter la piste rectiligne du corps du patin. En effet, il est utile de prévoir, au raccordement de la piste du corps du patin avec la partie cylindrique de l'embout, un chanfrein 23 destiné à faciliter l'introduction du galet porteur sous la charge. A ce point précis toute contrainte est supprimée sur l'organe intercalaire qui franchira donc aisément le passage d'une piste à l'autre.

A la Figure 10, les bandes 6a sont remplacées par des bandes 21 qui se prolongent au-delà du corps 1 dans les embouts par des portions courbes 21a qui remplacent l'évidement 13.

Les bandes 21 seront arrêtées, de préférence, à l'endroit 22 où se trouve positionné l'organe intercalaire lorsque le galet porteur lui faisant immédiatement suite quitte la piste rectiligne, La présence de ce léger chanfrein 23 supprime en effet à ce point précis du parcours toute contrainte sur l'organe intercalaire qui pourra ainsi passer aisément de la piste constituée par le prolongement à celle ménagée dans l'embout.

Il va de soi que la présente invention ne doit pas être considérée comme limitée aux modes de réalisation décrits et représentés, mais, en couvre, au contraire, toutes les variantes. C'est ainsi, en particulier, qu'on pourrait se donner un chemin de maintien des éléments intercalaires et déterminer alors la piste des galets, de manière telle que les axes homologues des éléments intercalaires conservent une distance constante entre eux.

## Revendications

1. Patin de roulement comprenant une série d éléments roulants porteurs (3), qui sont montés mobiles dans un support (1) comprenant un corps à deux pistes (2a) parallèles dites pistes porteuses rectilignes ou courbes, et deux embouts de retour (9) reliant deux extrémités respectives des deux pistes (2a), de manière à former une piste sans fin, les éléments porteurs (3) pouvant à la fois pivoter autour de leur axe de symétrie (03) qui est parallèle aux pistes (2a) et se déplacer perpendiculairement à cet axe (03) suivant la piste sans fin, (2a) et dans lequel un élément intercalaire (4) est placé entre deux éléments roulants porteurs (3) successifs, les extrémités de ces éléments intercalaires (4), ou ces éléments intercalaires eux-mêmes, étant disposés dans des évidements (5) qui forment un chemin de maintien (11) des éléments intercalaires, (4, 13), les évidements (5) étant ménagés ou bien dans la piste sans fin ou bien latéralement dans ou bien sur des épaulements (2) de guidage latéral des éléments roulants porteurs (3),

caractérisé en ce que la position et la forme du chemin de maintien (11) des éléments intercalaires (4) ou (13) par rapport à la piste (2a) sans fin des éléments roulants porteurs (3) ou inversement, est déterminée de manière que l'écart entre des axes homologues de deux éléments roulants (3) adjacents quelconques ou de deux éléments intercalaires (4, 13) adjacents quelconques, mesuré sur le trajet de ces axes homologues reste constant; un tel axe homologue étant défini par le fait qu'il est :

a) parallèle aux lignes génératrices de contact (A3), le dit contact étant soit entre chaque élément de roulement (3) et la piste sans fin (2a), soit entre chaque élément intercalaire (4) et son chemin de maintien (11) et qu'il est :

b) situé dans un plan perpendiculaire à la piste sans fin (2a) ou au chemin de maintien (11) et passant par la dite ligne génératrice de contact, (A3) et qu'il est:

c) situé à l'intérieur de la section de l'élément roulant (3)

ou de l'élément intercalaire (4, 13) et que:.

d) tous les axes homologues se trouvent à la même distance de la piste sans fin (2a) ou du dit chemin de maintien (11).

2. Patin de roulement selon revendication 1, caractérisé en ce que les axes homologues des éléments ronlants (3) sont constitués par les axes de symétrie (03) de ces éléments roulants.

3. Patin de roulement selon l'une des revendications 1 ou 2 caractérisé en ce que les éléments intercalaires (4) sont des éléments de retenue et disposés entre les parties extérieures des éléments roulants (3).

4. Patin de roulement selon revendication 1 ou 2, caractérisé en ce que les éléments intercalaires (4) sont disposés entre les parties intérieures (fig. 5) des éléments roulants (3).

5. Patin selon l'une quelconque des revendications 1 à 4, caractérisé en ce que chacun de ses embouts (19) comporte un prolongement (19a) qui s'étend dans le corps (1) du patin et dont la surface intérieure forme chemin de maintien pour les éléments intercalaires (4), (fig. 7).

6. Patin selon la revendication 5, caractérisé en ce que le prolongement de l'embout (19) s'arrête à l'endroit (24) où le trajet des éléments intercalaires cesse d'être rectiligne (fig. 9)

7. Patin selon l'une quelconque des revendications 1 à 6, caractérisé en ce que les éléments intercalaires (4) sont maintenus en place par des bandes (6, fig. 2) ou cornières (19a) au droit du corps (1) du patin comportant une partie rectiligne (21), et des parties incurvées (21a) qui se prolongent dans les embouts (19) et constituent en tout ou partie les chemins de maintien (11) de ces éléments intercalaires (4) dans les embouts (19), la profondeur de l'évidement (2a) pouvant être limibée au rayon des éléments roulants (3), (fig. 6 et 7).

8. Patin selon la revendication 7, caractérisé en ce que le prolongement des parties incurvées (21a) dans les embouts (19) s'arrête à l'endroit (22) où se trouve l'élément intercalaire (4) lorsque l'élement porteur (3) qui le suit immédiatement est positionné sur le chanfrein (23), (fig. 10).

9. Patin selon la revendication 4, caractérisé en ce que les éléments intercalaires (4) reposent sur le fond des évidements (2a et 2b) où sont maintenus dans des rainures (21) adjacentes à ces deux évidements, et à partir des extrémités de ces deux évidements, reposent sur les pistes de roulement (25) ou sont maintenus dans des rainures (21) qui leur sont propres.

**Patentansprüche**

1. Rollenumlaufschuh, bestehend aus einer Folge tragender Rollenelemente (3), die beweglich in einen Träger (1) eingebaut sind, der aus einem Körper mit zwei parallelen, geradlinigen oder gekrümmten Spuren (2a), Trägerspuren genannt, und zwei Rücklaufansätzen (9) zur Verbindung der beiden jeweiligen Enden der Spuren (2a) besteht, sodaß eine Endlosspur gebildet wird, wobei sich die Trägerelemente (3) einerseits um ihre Symmetrieachse (03) drehen können, die parallel zu den Spuren (2a) verläuft, und sich andererseits senkrecht zu dieser Achse (03), entlang der Endlosspur (2a) verlagern können, in der zwischen jeweils zwei aufeinanderfolgenden tragenden Rollenelementen (3) ein Zwischenelement (4) eingelegt ist, wobei die Enden dieser Zwischenelemente oder die Zwischenelemente selbst in Aussparungen (5) lagern, die eine Führung (71) für die Zwischenelemente (4,13) bilden und die Aussparungen (5) entweder in der Endlosspur oder seitlich in oder auf Schulteransätzen (2) zur Führung der tragenden Rollenelemente (3) angebracht sind, dadurch gekennzeichnet, daß Lage und Form der Führung (11) für die Zwischenelemente (4) oder (13) in Bezug auf die Endlosspur (2a) für die tragenden Rollenelemente (3)-bzw. umgekehrt - derart festgelegt ist, daß der Abstand zwischen den homologen Achsen zweier beliebiger nebeneinanderliegender Rollenelemente (3) oder zweier beliebiger nebeneinanderliegender Zwischenelemente (4,13) in Bezug auf den Umlaufweg dieser homologen Achsen konstant bleibt; eine solche homologe Achse ist hierbei so definiert, daß sie:

a) parallel zu den Kontaktbildungslinien (A3) verläuft, wobei der besagte Kontakt entweder zwischen jedem Rollenelement (3) und der Endlosspur (2a) oder zwischen jedem Zwischenelement (4) und seiner Führung (11) gebildet wird, und daß sie:

b) auf einer Ebene liegt, die senkrecht zur Endlosspur (2a) bzw. zur Führung (11) liegt und über die besagte Kontaktbildungslinie (A3) verläuft, und daß sie:

c) innerhalb des Querschnitts des Rollenelements (3) bzw. des Zwischenelements (4,13) liegt, sowie daß:

d) sämtliche homologen Achsen denselben Abstand zur Endlosspur (2a) bzw. zur Führung (11) haben.

2. Rollenumlaufschuh entsprechend Patentanspruch 1, dadurch gekennzeichnet, daß die homologen Achsen der Rollenelemente (3) durch die Symmetrieachsen (03) dieser Rollenelemente gebildet werden.

3. Rollenumlaufschuh entsprechend Patentanspruch 1 oder 2, dadurch gekennzeichnet, daß die Zwischenelemente (4) zwischen den Außenseiten der Rollenelemente (3) angebracht sind.

4. Rollenumlaufschuh entsprechend Patentanspruch 1 oder 2, dadurch gekennzeichnet, daß die Zwischenelemente (4) zwischen den Innenseiten der der Rollenelemente (3) angebracht sind.

5. Rollenumlaufschuh entsprechend einem beliebigen der Patentansprüche 1 bis 4, dadurch gekennzeichnet, daß jeder der Ansätze (19) eine Verlängerung (19a) besitzt, die bis in den Körper (7) des Rollenumlaufschuhs reicht und deren Innenfläche eine Führung für die Zwischenelemente (4) bildet (Abb. 7).

6. Rollenumlaufschuh entsprechend Patentanspruch 5, dadurch gekennzeichnet, daß die Verlängerung des Ansatzes (19) an dem Punkt (24) endet, wo auch der geradlinige Umlauf der Zwischenelemente endet (Abb. 9).

7. Rollenumlaufschuh entsprechend einem beliebigen der Patentansprüche 1 bis 6, dadurch gekennzeichnet, daß die Zwischenelemente durch Bänder (6) (Abb. 2) oder Winkel (19a) in gerader Verbindung mit dem Rollenumlaufschuhkörper (1) gehalten werden und daß letzterer einen geradlinigen Teil (21) und gekrümmte Teile (21a) besitzt, die durch die Ansätze (19) verlängert werden und ganz oder teilweise Führungen (11) für diese Zwischenelemente (4) in den Ansätzen (19) bilden, wobei die Tiefe der Aussparungen (2a) sich auf den Radius der Rollenelemente (3) beschränken kann (Abb. 6 und 7).

8. Rollenumlaufschuh entsprechend Patentanspruch 7, dadurch gekennzeichnet, daß die Verlängerung der gekrümmten Teile (21a) in den Ansätzen (19) an dem Punkt (22) endet, wo sich das Zwischenelement (4) befindet, wenn das tragende Rollenelement (3), das ihm unmittelbar folgt, auf der Abfasung (23) positioniert ist (Abb. 10).

9. Rollenumlaufschuh entsprechend Patentanspruch 4, dadurch gekennzeichnet, daß die Zwischenelemente (4) auf dem Boden der Aussparungen (2a) und (2b) aufliegen oder von den an diese beiden Aussparungen angrenzenden Rillen (21) gehalten werden und von den Rändern dieser Aussparungen aus auf den Rollspuren (25) aufliegen oder in den ihnen zugeordneten Rillen (21) festgehalten werden.

## Claims

1. Bearing shoe comprising a series of rolling carrier elements (3) which are movable in a support (1) comprising a body with two parallel tracks (2a) called rectilinear or curved bearing tracks, and two return end pieces (9) connecting together two respective ends of the two tracks (2a) so as to form an endless track, the carrier elements (3) being able both to pivot about their axis of symmetry (03) which is parallel to the tracks (2a) and to move perpendicularly to this axis (03), along the endless track (2a) and in which an insert element (4) is placed between two successive rolling carrier elements (3), the ends of these insert elements (4), or these insert elements themselves, being disposed in recesses (5) which form a path (11) for holding the insert elements (4, 13) in position the recesses (5) being formed either in the endless track or else laterally in or on shoulders (2) for lateral guiding of the rolling carrier elements (3), characterized in that the position and the shape of the path (11) holding the insert elements (4) or (13) in position with respect to the endless track (2a) of the rolling carrier elements (3) or conversely, is determined so that the spacing between homologous axes of any two adjacent rolling elements (3) or of any two adjacent insert elements (4, 13), measured along the path of these homologous axes, remains constant; such an homologous axis being defined by the fact that it is:

a) parallel to the contact generatrix lines (A3), said contact being either between each rolling element (3) and the endless track (2a), or between each insert element (4) and its holding path (11) and that it is:

b) situated in a plane perpendicular to the endless track (2a) or to the holding path (11) and passing through said contact generatrix line (A3), and that it is:.

c) situated inside the section of the rolling element (3) or the insert element (4, 13) and that:

d) all the homologous axes are at the same distance from the endless track (2a) or from said holding path (11).

2. Bearing shoe according to claim 1, characterized in that the homologous axes of the rolling elements (3) are formed by the axes of symmetry (03) of these rolling elements.

3. Bearing shoe according to one of claims 1 or 2, characterized in that the insert elements (4) are retaining elements disposed between the external parts of the rolling elements (3).

4. Bearing shoe according to claim 1 or 2, characterized in that the insert elements (4) are disposed between the inner parts (Figure 5) of the rolling elements (3).

5. Shoe according to any one of claims 1 to 4, characterized in that each of the end pieces (19) has an extension (19a) which extends into the body (1) of the shoe and whose inner surfaces forms a holding path for the insert elements (4), (Figure 7).

6. Shoe according to claim 5, characterized in that the extension of the end piece (19) stops at the position (24) where the path of the insert elements ceases to be rectilinear (Figure 9).

7. Shoe according to any one of claims 1 to 6 characterized in that the insert elements (4) are held in position by strips (6, Figure 2) or brackets (19a) in line with the body (1) of the shoe having a rectilinear part (21) and curved parts (21a) which extend into the end pieces (19) and form wholly or partly the paths (11) for holding these insert elements (4) in the end pieces (19), the depth of the recess (2a) being limited to the radius of the rolling elements (3), (Figures 6 and 7).

8. Shoe according to claim 7, characterized in that the extension of the curved parts (21a) in the end piece (19) stops at the position (22) where the insert element (4) is located when the carrier element (3) which immediately follows it is positioned on the chamfer (23), (Figure 10).

9. Shoe according to claim 4, characterized in that the insert elements (4), rest on the bottom of the recesses (2a) and (2b) or are held in position in grooves (21) adjacent these two recesses, and from the ends of these two recesses rest on the rolling tracks (25) or are held in position in grooves (21) which are proper to them.

FIG.1

0076754

FIG. 2

FIG. 3

FIG. 4

# FIG. 5

FIG. 6

FIG. 7

FIG. 9

FIG. 8

FIG. 10